# EUROPEAN PATENT SPECIFICATION

(11) **EP 2 301 757 B1**
(45) Date of publication and mention of the grant of the patent: **21.11.2012**
(21) Application number: 10166103.1
(22) Date of filing: 16.06.2010
(51) Int. Cl.: B41J 2/21, B41J 29/393

(54) **Printing apparatus using plural color inks including white color ink and printing method thereof**
Druckvorrichtung mit mehreren Farbtinten mit Tinte aus weißer Farbe und Druckverfahren dafür
Appareil d'impression utilisant des encres de plusieurs couleurs y compris de l'encre blanche et procédé d'impression correspondant

(30) Priority: 31.08.2009 JP 2009199217; 11.12.2009 JP 2009281293; 16.03.2010 JP 2010058820
(43) Date of publication of application: 30.03.2011
(73) Proprietor: Seiko Epson Corporation, Shinjuku-ku Tokyo (JP)
(72) Inventor: Kamijo, Takeho, Nagano 392-8502 (JP)
(74) Representative: HOFFMANN EITLE

(56) References cited:
- JP-A- 2008 200 850
- US-A- 4 630 076
- US-A1- 2005 093 904

## Description

### BACKGROUND

### 1. Technical Field

The present invention relates to a printing apparatus using a plurality of color inks including a white color ink and a printing method thereof.

### 2. Related Art

Printing apparatuses which print using a white color ink in addition to color inks such as cyan, magenta, and yellow are known (For example, in JP-A-2002-38063). The printing apparatus which prints using a plurality of color inks including a white color ink can, for example, perform the treatment of the surface of a printing medium with the use of a white color ink and/or complementary color processing depending on the ground color to reproduce a color image without being influenced by the ground color of the printing medium.

There are some cases in which a transparent film is used as the printing medium when printing by using a plurality of color inks including a white color ink. For example, it is possible to use the transparent film like a white printing medium as the printing medium in a manner of forming a color image after forming a white image using a white color ink, or forming a white image after forming a color image on the transparent film. There are some cases in which a white protective layer (also can be called a "separator") is detachably attached to the opposite side surface (back surface) of the print surface (front surface) of the transparent film serving as the printing medium, for the purpose of preventing scratches, for example.

For example, in the case of performing correction (calibration) during printing, color measurement of a printed image is performed. In the case of performing the color measurement of the white image during the printing using the transparent film, since it is impossible to detect a density difference in the white image by the color measurement in the state in which the white protective layer is attached to the transparent film, a complicated process, for example, including a step of peeling off the protective layer from the transparent film, a step of setting the transparent film on the black background, and then a step of measuring color of the white image is required. Furthermore, when peeling off the protective layer from the transparent film, there is a concern that the transparent film will be scratched. Therefore, there is a concern that the accuracy of the color measurement is lowered due to the scratches on the transparent film.

JP-A-2008 200850 discloses a printing apparatus capable of printing a non-white image on a transparent printing medium and forming a white image on the formed non-white image in an overlapping manner.

### SUMMARY

An advantage of some aspects of the invention is to accomplish high accuracy and efficiency in color measurement of a white image formed by printing with the use of a plurality of color inks including a white color ink.

In order to solve at least part of the above problems, the invention can be realized in the following forms and applications.

### Application 1

A printing apparatus, which prints on a transparent printing medium with a back surface to which a white protective layer is detachably attached by using a plurality of color inks including a white color ink, includes a head having a nozzle group which ejects ink, a control unit forming an image on the transparent printing medium by controlling the head, and a color measurement unit measuring color of an image formed on the transparent printing medium in the state in which the protective layer is attached to the transparent printing medium, in which the control unit controls the head such that a black image is formed on the transparent printing medium and a white image is formed on the formed black image in an overlapping manner in the case in which an object to be color-measured is a white image containing an image of a toned-white color which is an adjusted white color.

According to the printing apparatus, in the case in which the object to be color-measured is a white image, a black image is formed on the transparent printing medium, a white image is then formed on the formed black image in an overlapping manner, and the color measurement of the image formed on the transparent printing medium is performed in the state in which the protective film is attached to the transparent printing medium. Accordingly, it is possible to efficiently perform the color measurement of the white image without peeling off the protective film from the transparent printing medium and setting the transparent printing medium on the black background, prevent the transparent printing medium from getting scratched, inhibit influence of the scratches of the transparent printing medium on a color measurement value, and perform the color measurement of the white image with high accuracy.

### Application 2

In the printing apparatus of Application 1, it is preferable that the control unit controls the head in a manner such that an image which is the object to be color-measured is directly formed on the transparent printing medium in the case in which the object to be color-measured is an image other than the white image.

According to the printing apparatus, the image which is the object to be color-measured is directly formed on the transparent printing medium in the case in which the object to be color-measured is an image other than the white image. Accordingly formation of the black image serving as the background is not needed. Therefore, it is possible to efficiently and highly accurately perform the color measurement of even an image which is other than the white image.

### Application 3

In the printing apparatus of Application 1 or Application 2, it is preferable that the head includes a first nozzle group for forming a color image including a black image on the transparent printing medium and a second nozzle group for forming a white image on the transparent printing medium as the nozzle group, and the control unit controls the head in a manner such that, in the case in which the object to be color-measured is the white image, formation of the black image using the first nozzle group and formation of the white image using the second nozzle group are performed in parallel during at least one part of the period of the printing.

According to the printing apparatus, it is possible to perform in parallel formation of the black image on the transparent printing medium and formation of the white image on the formed black image. Therefore, it is possible to efficiently perform the color measurement of the white image formed by printing using a plurality of color inks including a white color ink.

### Application 4

In the printing apparatus of any one out of Application 1 to Application 3 it is preferable that, in the case in which a plurality of black patches having the same density value are printed at a plurality of densities, a print density of the black image is set with a density of the black patches having the smallest variance in brightness values thereof among the plurality of black patches having the same density value.

According to the printing apparatus, the density of the black patches having the smallest variance in the brightness values among the plurality of black patches having the same density value is set as the print density of the black image. Accordingly, it is possible to appropriately perform the color measurement of the white image without variation.

### Application 5

In the printing apparatus of Application 4, it is preferable that, in the case in which a print instruction of the white image is received, a single black patch having the density of which the variance in the brightness values is the smallest is printed, calibration is performed with respect to the single printed black patch, and the black image is printed using the density after the calibration.

According to the printing apparatus, the black image is printed using the density of the black patch after the calibration. Accordingly, it is possible to appropriately perform the color measurement of the white image on the basis of the black image having an accurate density characteristic.

### Application 6

In the printing apparatus of Application 5, it is preferable that the black patch to be printed to perform the calibration is printed by bidirectional printing (Bi-D) and the black image is printed by unidirectional printing (Uni-D).

According to the printing apparatus, the black patch for performing the calibration is printed by the bidirectional printing (BiD). Accordingly, it is possible to print the black patch at fast speed. Further, since the black image is printed by the unidirectional printing (Uni-D), it is possible to secure a sufficient time to dry the black image and thus to prevent the black image from spreading into the white image when forming the white image on the black image in an overlapping manner.

### Application 7

In the printing apparatus of any one out of Application 4 to Application 6, it is preferable that the black patch is printed using a downstream side nozzle in a printing medium transportation direction and the black image is printed using an upstream side nozzle in the printing medium transportation direction.

According to the printing apparatus, the black patch is printed using the downstream side nozzle and the black image is printed using the upstream side nozzle. Accordingly, the difference between frequencies in the use of the upstream side nozzle and the downstream side nozzle is small. As a result, the unevenness of color is suppressed.

### Application 8

A printing method of printing on a transparent printing medium with a back surface to which a white protective layer is detachably attached, using a plurality of color inks including a white color ink, includes (a) forming an image on the transparent printing medium by controlling a head having a nozzle group which ejects ink, and (b) measuring color of an image formed on the transparent printing medium in the state in which the protective film is attached to the transparent printing medium, wherein in step (a), in the case in which an object to be color-measured is a white image containing an image of a toned-white color which is an adjusted white color, the head is controlled such that a black image is formed on the transparent printing medium and the white image is formed on the formed black image in an overlapping manner.

The invention can be realized in various embodiments, for example, a printing method and a printing apparatus, a printing control method and a printing control apparatus, a color measuring method and a color measuring apparatus, a correcting method of a printing apparatus, a printing system, a computer program for executing functions of these methods, apparatuses, and systems, a recording medium in which the computer program is recorded, and a data signal or the like embodied in a carrier wave along with the computer program or the like.

### BRIEF DESCRIPTION OF THE DRAWINGS

The invention will be described with reference to the accompanying drawings, wherein like numbers reference like elements.

Fig. 1 is an explanatory view schematically showing the structure of a printing system according to one embodiment of the invention.

Fig. 2 is an explanatory view schematically showing the structure of a PC.

Fig. 3 is an explanatory view schematically showing the structure of a printer.

Fig. 4 is a block diagram functionally showing the structure of the PC.

Fig. 5 is a block diagram functionally showing the structure of the printer.

Fig. 6 is a flowchart showing the flow of correction processing according to another embodiment of the invention.

Fig. 7 is an explanatory view showing one example of an image to be printed for the correction processing.

Figs. 8A is an explanatory view showing one example of an image to be printed for the correction processing.

Figs. 8B is an explanatory view showing one example of an image to be printed for the correction processing.

Fig. 9A is an explanatory view showing print order of a color image and a toned-white image.

Fig. 9B is an explanatory view showing print order of the color image and the toned-white image.

Fig. 10 is a flowchart showing the flow of print processing according to a further embodiment of the invention.

Fig. 11 is a flowchart showing the flow of processing by a CPU which executes a printer driver.

Fig. 12 is a flowchart showing the flow of color conversion processing, ink color separation processing, and halftone processing for the toned-white image.

Fig. 13A is an explanatory view partially showing an example of a look-up table for the toned-white image.

Fig. 13B is an explanatory view partially showing another example of the look-up table for the toned-white image.

Fig. 14 is a flowchart showing the flow of color conversion processing, ink color separation processing, and halftone processing for a color image.

Fig. 15 is an explanatory view partially showing an example of a look-up table for the color image.

Fig. 16 is a flowchart showing the flow of command production processing.

Fig. 17A is an explanatory view showing an example of a command created by command production processing.

Fig. 17B is an explanatory view showing another example of the command created by the command production processing.

Fig. 18 is an explanatory view showing an example of the content of an ink code table.

Fig. 19 is a flowchart showing the flow of processing by the printer.

Fig. 20 is an explanatory view showing the detailed structure of a raster buffer and a head buffer.

Fig. 21A is an explanatory view showing the structure of a print head of the printer.

Fig. 21B is another explanatory view showing the structure of the print head of the printer.

Fig. 21C is a further explanatory view showing the structure of the print head of the printer.

Fig. 22 is an explanatory showing an example of a patch sheet for specifying a density.

Fig. 23 is a flowchart showing the flow of processing of printing a patch sheet for specifying a density.

### DESCRIPTION OF EXEMPLARY EMBODIMENTS

Hereinafter, embodiments of the invention will be described in the following order;
A. Embodiment:
   A-1. Structure of printing system:
   A-2. Correction processing:
A-3. Print processing:
   B. Modified example.

### A. Embodiment

### A-1. Structure of printing system:

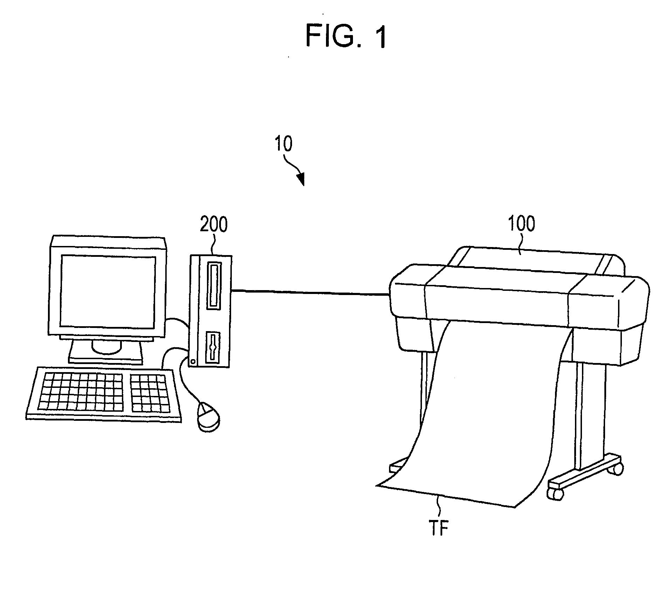

Fig. 1 is an explanatory view schematically showing the structure of a printing system according to one embodiment of the invention. A printing system 10 of the embodiment includes a printer 100 and a personal computer (PC) 200. The printer 100 is an ink jet type color printer for printing an image by forming ink dots on a printing medium by ink ejection. The PC 200 functions as a printing control apparatus for supplying print data to the printer 100 and controlling print operation of the printer 100. The printer 100 and the PC 200 are connected to each other in wired or wireless manner so that information can be transmitted and received therebetween. In detail, according to the embodiment, the printer 100 and the PC 200 are connected to each other by a USB cable. In the embodiment, as the printing medium, a transparent film TF with a white protective layer (hereinafter, referred to as "separator SE") detachably attached to the opposite side surface (back surface) other than the print surface (front surface) of the transparent film TF is used.

The printer 100 according the embodiment is a printer which prints using a total of seven color inks of cyan (C), magenta (M), yellow (Y), black (K), light cyan (Lc), light magenta (Lm), and white (W). The printing system 10 according to the embodiment can perform print processing in which a color image and a toned-white image are formed in parallel on the transparent film TF serving as the printing medium. That is, the printer 100 can print using the transparent film TF like a white printing medium as the printing medium by forming the color image on the toned-white image while forming the toned-white image, or forming the toned-white image on the color image while forming the color image on the transparent film TF. The transparent film TF on which the color image and the toned-white image are formed may be, for example, a film for packaging goods.

In the specification, the term "white" not only means substantial white which is a color of appearance of an object which reflects 100% of all wavelengths of incident visible light but also refers to a color which can be called white in the common sense, for example, "white-tint." That is, the term "white" means (1) a color within a color range in which a representative in a Lab system is around or inside a circle having a radius of 20 on a*b* plane and L* is 70 or more in the case in which color is measured in the condition of color measurement mode: spot color measurement, light source: D50, backing: black, and printing medium: transparent film, by using "eye-one Pro" which is a spectrophotometer manufactured by X-Rite corporation, (2) a color within a color range in which a representative in a Lab system is around or inside a circle having a radius of 20 on a*b* plane and L* is 70 or more in the case in which color is measured in the condition, measurement mode D502° viewing angle, SCF mode, and white background back, by using a spectrophotometer CM2022 which is a spectrophotometer manufactured by Minolta Corp., or (3) a color of an ink used as the background of an image as disclosed in JP-A-2004-306591, and the meaning of the term "white" is not limited to pure white but includes an ink color that can used as the background.

Further, in the specification, adjusting a white color (white) ink by mixing a predetermined amount of a color ink with the white color ink is referred to as "white-toning" and a white color produced by the white-toning (white which is toned) is called "toned-white", and an image formed of the toned-white is called a "toned-white image." However, the meaning of the term "toned-white" also includes a white color in which a zero amount of a color ink is mixed with the white color ink. That is, the term "toned-white" also includes a white color composed of only the white color ink. In a similar manner, the meaning of the term "toned-white image" includes a white image formed of only the white color ink. The meaning of the term "color image" includes an image formed of only a single color ink other than the white color (for example, a black image formed of only a black ink).

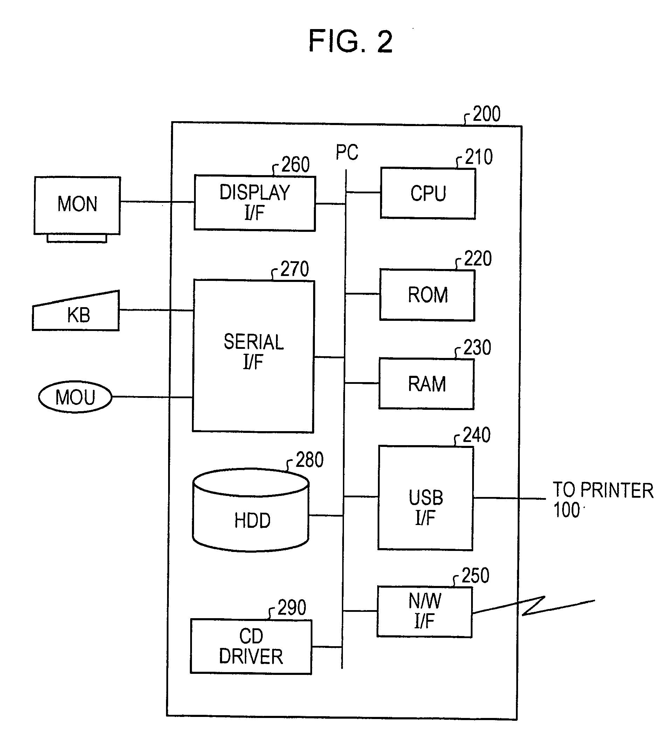

Fig. 2 is an explanatory view schematically showing the structure of a PC 200. The PC 200 includes a CPU 210, a ROM 220, a RAM 230, a USB interface (USB I/F) 240, a network interface (N/W I/F) 250, a display interface (display I/F) 260, a serial interface (serial I/F) 270, a hard disk drive (HDD) 280, and a compact disk drive (CD drive) 290. The components of the PC 200 are connected to each other via a bus.

The display interface 260 of the PC 200 is connected to a monitor MON serving as a display device. The serial interface 270 is connected to a keyboard KB and a mouse MOU serving as input devices. The structure of the PC 200 shown in Fig. 2 is only an example. Therefore, the structure of the PC 200 can be transformed so as to omit some of the components of the above or include other components.

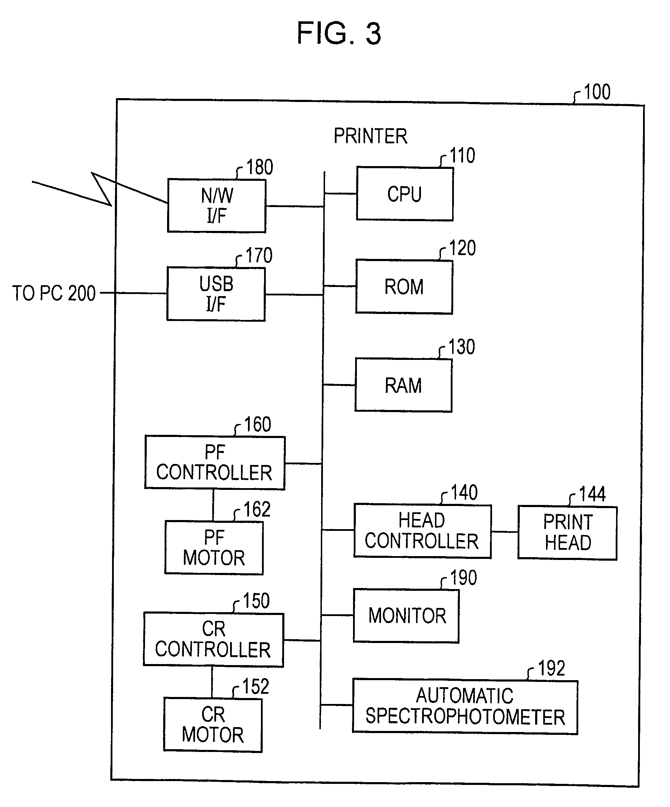

Fig. 3 is an explanatory view schematically showing the structure of a printer 100. The printer 100 includes a CPU 110, a ROM 120, a RAM 130, a head controller 140, a print head 144, a carriage controller (CR controller) 150, a carriage motor (CR motor) 152, a printing medium transportation controller (PF controller) 160, a printing medium transportation motor (PF motor) 162, a USB interface (USB I/F) 170, a network interface (N/W I/F) 180, a monitor 190 serving as a display unit, and an automatic spectrophotometer 192 for automatically measuring color of a print image. Components of the printer 100 are connected to each other via a bus.

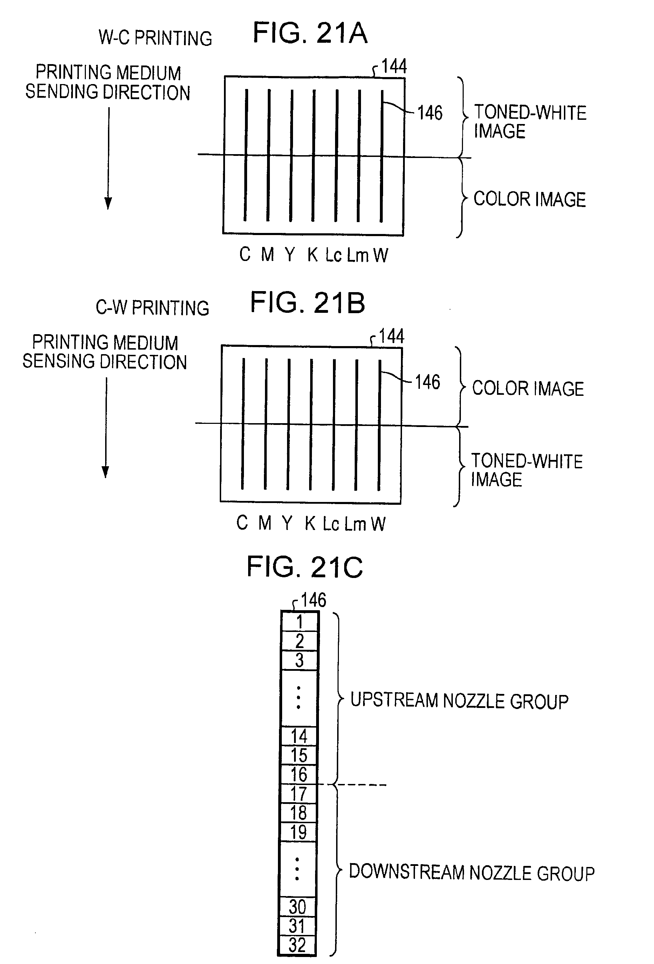

The CPU 110 of the printer 100 functions as a control unit which controls operation of the entire printer 100 by executing a computer program stored in the ROM 120. The print head 144 of the printer 100 is mounted on the carriage which is not shown. The carriage controller 150 moves the carriage in reciprocating manner in a predetermined direction by controlling the carriage motor 152. With such control, the print head 144 reciprocates in the predetermined direction (main scanning direction) of the printing medium. That is, main scanning is performed. The printing medium transportation controller 160 performs sub-scanning in which the printing medium is transported in a direction (sub-scanning direction) which is orthogonal to the main scanning direction by controlling the printing medium transportation motor 162. The print head 144 has a nozzle group (shown in Fig. 21) which ejects ink, and the head controller 140 controls ejection of ink from the nozzle group by the print head 144 in association with the main scanning and sub-scanning operations. In such a manner, formation of an image on the printing medium (printing of an image) is realized.

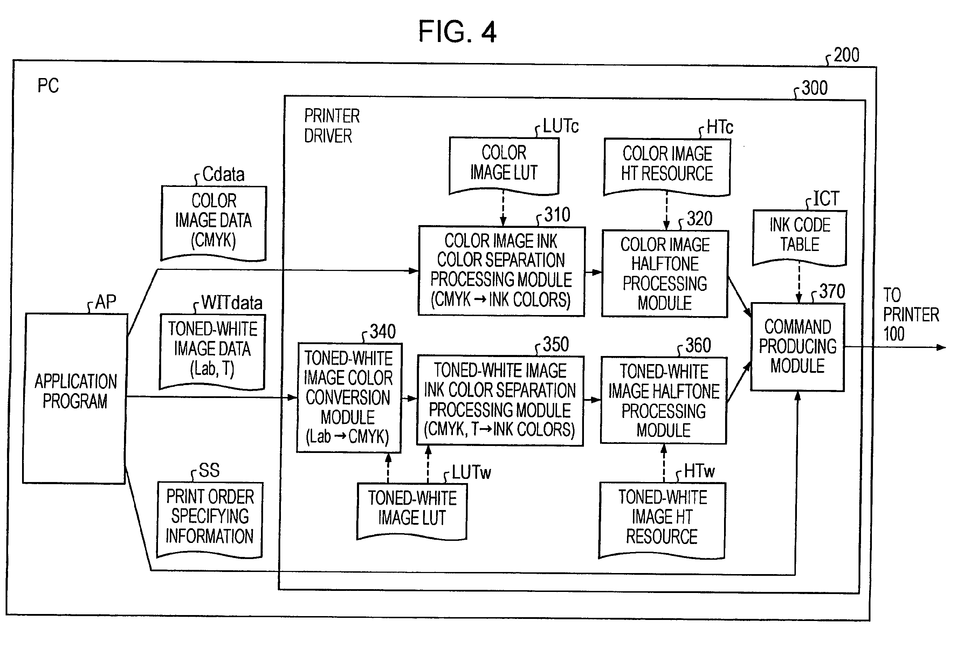

Fig. 4 is a block diagram functionally showing the structure of the PC 200. The ROM 220 (shown in Fig. 2) of the PC 200 stores an application program AP and a printer driver 300 as computer programs executed by the CPU 210 therein. The application program AP is a program to set, produce, and edit an image (hereinafter, referred to as "printing object image PI") which is an object to be printed on the transparent film TF serving as the printing medium. The CPU 210 realizes setting, producing, and editing of the printing object image PI by executing the application program AP.

The CPU 210 which executes the application program AP outputs color image data Cdata, toned-white image data WITdata, and print order specifying information SS to the printer driver 300 in response to a print execution instruction. The content of the data will be described below.

The printer driver 300 (shown in Fig. 4) is a program for producing print data (print command) on the basis of image data or the like and performing print processing of the printing object image PI by controlling the printer 100 (shown in Fig. 1) on the basis of the print data. The CPU 210 (Fig. 2) realizes print control of the printing object image PI by the printer 100 by executing the printer driver 300.

As shown in Fig. 4, the printer driver 300 includes a color image ink color separation processing module 310, a color image halftone processing module 320, a toned-white image color conversion module 340, a toned-white image ink color separation processing module 350, a toned-white image halftone processing module 360, and a command producing module 370. The HDD 280 (Fig. 2) of the PC 200 stores a color image look-up table (LUT) LUTc, a color image halftone (HT) resource HTc, a tone-white image look-up table (LUT) LUTw, a toned-white image halftone (HT) resource HTw, and an ink code table ICT therein. The printer driver 300 and the above-mentioned modules execute the processing referring to the information. The contents or information of each module will be described below.

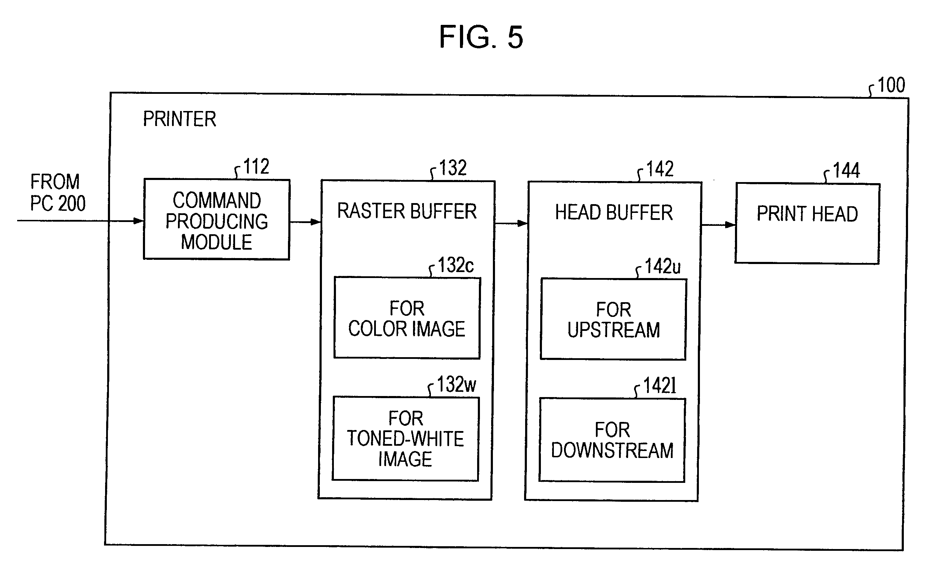

Fig. 5 is a block diagram functionally showing the structure of the printer 100. The ROM 120 (shown in Fig. 3) of the printer 100 stores a command processing module 112 which is a computer program executed by the CPU 110 therein. Although it is described later, the CPU 110 realizes processing of the command received from the PC 200 by executing the command processing module 112. The RAM 130 (Fig. 3) of the printer 100 has a raster buffer 132. The raster buffer 132 includes two regions, a color image raster buffer 132c and a toned-white image raster buffer 132w. The head controller 140 (Fig. 3) of the printer 100 has a head buffer 142. The head buffer 142 includes an upstream head buffer 142u and a downstream head buffer 1421. Functions and detailed structures of the programs and buffers are described later.

### A-2. Correction processing:

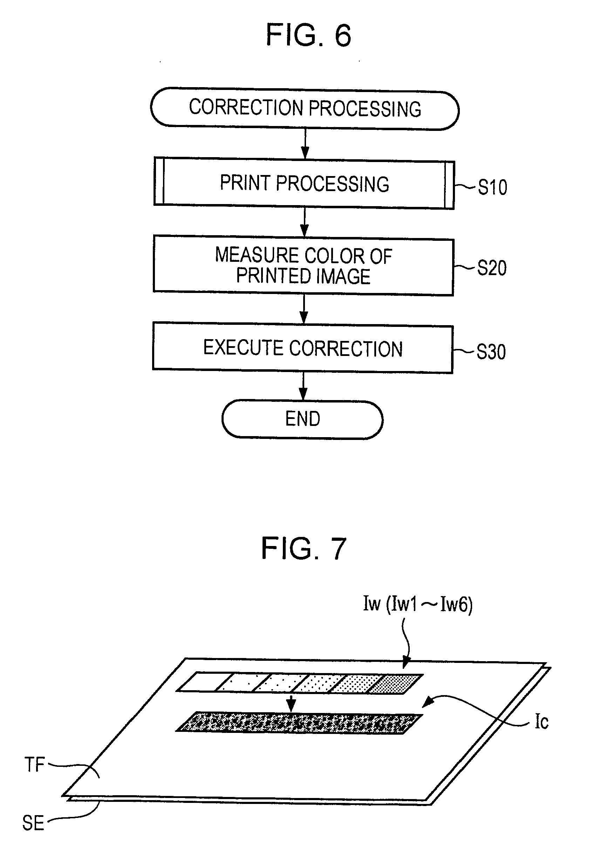

Fig. 6 is a flowchart showing the flow of correction processing in the printing system 10 according to the embodiment. The correction processing is processing of printing the printing object image PI for the correction processing on the basis of predetermined image data, performing the color measurement of the printed image, and adjusting (correcting) the printer 100 on the basis of the result of comparison between the image data and the measured color value. Hereinafter, the correction processing in which the white color ink is an object to be adjusted will be described.

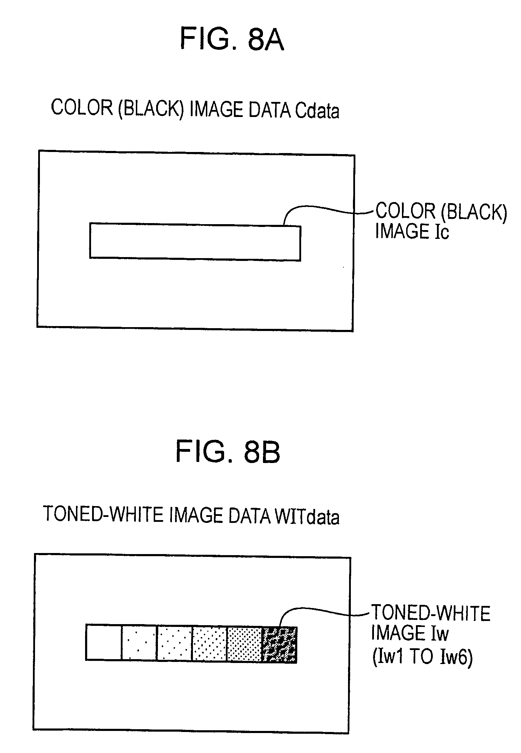

In Step S10 (Fig. 6), print processing of the printing object image PI used for the correction processing is performed. Fig. 7 and Figs. 8A and 8B are explanatory views showing examples of the printing object image PI used for the correction processing. Fig. 7 schematically shows a state in which the printing object image PI is formed on the surface (print surface) of the transparent film TF, which is the opposite surface of the surface (back surface) to which the separator SE is attached. As shown in Fig. 7, when performing the correction processing to adjust the white color ink as an object, a black image is formed as a color image Ic and then a white image is formed on the black image as a toned-white image Iw in an overlapping manner. In the embodiment, the toned-white image Iw is composed of a plurality of image regions (Iw1 to Iw6) having different densities.

Figs. 8A and 8B show image data used for printing the printing object image PI for the correction processing. In detail, Fig. 8A shows color image data Cdata used for forming a black image serving as the color image Ic, and Fig. 8B shows toned-white image data WITdata used for forming a white image serving as the toned-white image Iw. The color image data Cdata and the toned-white image data WITdata are prepared beforehand, and stored in the hard disk drive 280 of the PC 200.

In the embodiment, the color image data Cdata is represented by a color specification value of CMYK color specification system. The toned-white image data WITdata is represented by a combination of a density value T and a color specification value (L* value (hereinafter, simply referred to as "L value"), a* value (hereinafter, simply referred to as "a value"), and b* value (hereinafter, simply referred to as "b value")) in L*a*b color specification system. T value is in relation with an ink amount per a unit area upon printing the toned-white image Iw.

The color image data Cdata and the toned-white image data WITdata are not needed to be prepared beforehand but may be produced at the time of performing print processing. For example, values representing colors of corresponding regions (Iw1 to Iw6) of the toned white image Iw are acquired via the user interface, the toned-white image data WITdata may be produced on the basis of the acquired values. The color image data Cdata is produced in a manner such that the color image Ic is associated with the regions of the toned-white image Iw of the produced toned-white image data WITdata.

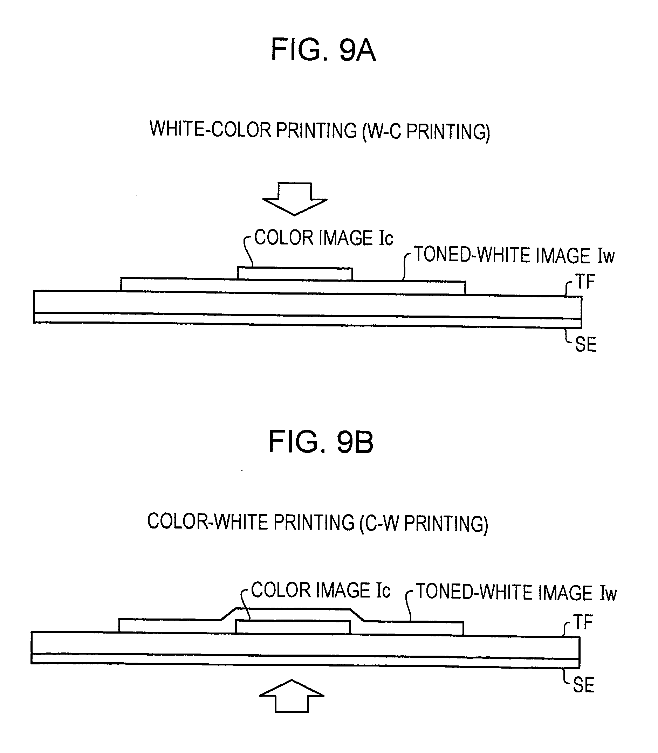

As described below, the printing system 10 of the embodiment can form the color image Ic and the toned-white image Iw such that they overlap each other. Figs. 9A and 9B are explanatory views showing the print order of the color image Ic and the toned-white image Iw. Fig. 9A shows the order in which the toned-white image Iw is formed on the transparent film TF and then the color image Ic is formed on the toned-white image Iw. In the specification, this print order is referred to as "white-color printing" or "W-C printing." In the W-C printing shown in Fig. 9A, a viewer can see a print piece from the upside of the figure (see an arrow in the figure). Fig. 9B shows the print order in which the color image Ic is formed on the transparent film TF, and then the toned-white image Iw is formed on the color image Ic. In the specification, this print order is referred to as "color-white printing" or "C-W printing." In the C-W printing shown in Fig. 9B, a viewer sees the print piece from the underside (see an arrow in the figure).

In the correction processing in which the white color ink is an object to be adjusted, as shown in Fig. 7, the C-W printing is performed. The print order in the print processing is specified by print order specifying information SS (shown in Fig. 4).

Upon the print processing (Step S10 in Fig. 6), the color image data Cdata, the toned-white image data WITdata and the print order specifying information SS are supplied to the printer driver 300 from the application program AP (see Fig. 4), a command is produced on the basis of the data and information within the printer driver 300 and sent to the printer 100, and the printing is performed on the basis of the command in the printer 100. The detailed content of the print processing will be described in a following chapter with the heading of "A-3. Print processing" later.

In Step S20 (shown in Fig. 6), the color measurement of the printed image formed by the print processing of Step S10 is performed. As described above, the printer 100 according to the embodiment has an automatic spectrophotometer 192 and the color measurement of the printed image can be automatically performed by the automatic spectrophotometer 192. The color measurement of the image regions (Iw1 to Iw6) which constitute the toned-white image Iw (shown in Fig. 7) is performed in the state in which the separator SE is attached to the transparent film TF. Color measurement values are values corresponding to the toned-white image data WITdata, that is, L value, a value, b value, and T value.

In Step S30 (Fig. 6), the correction of the printer 100 is executed. In the correction of the printer 100, adjustment of, for example, an ink ejection amount or the like of the printer 100 is performed on the basis of the result of comparison between the toned-white image data WITdata and the color measurement values.

As described above, the printing system 10 of the embodiment prints on the print surface of the transparent film TF to which the white protective layer (separator SE) on the back side is detachably attached, using the plurality of color inks including the white color ink. In the correction processing, in which the white color ink is an object to be adjusted, in the printing system 10, the black image (color image Ic) is formed on the transparent film TF, the white image (toned-white image Iw) is formed on the black image in an overlapping manner, and then automatic color measurement of the white image is performed. While the color measurement of the white image is performed in the state in which the separator SE of a white color is attached to the transparent film TF, however, in the embodiment, since the black image is formed under the white image, it does not happen that the density difference of the white images cannot be detected. Therefore, the color measurement can be performed without problems. Accordingly, in the embodiment, it is possible to efficiently realize the color measurement of the white image without peeling off the separator SE from the transparent film TF or setting the transparent film TF on the black background. In the embodiment, since it is not necessary to peel off the separator SE from the transparent film TF in the printer 100, it is possible to prevent the transparent film TF from being scratched. Moreover, it is possible to prevent the scratches on the transparent film TF from negatively influencing the color measurement values, and to realize the color measurement of the white image with high accuracy.

### A-3. Print processing:

Hereinafter, details of the printing process (Step S10 of Fig. 6) will be described. The description is not given to only the limited partial print processing relating to the correction processing but to the overall print processing but to the overall print processing of printing a general print object PI. When performing the correction processing, a correction processing image shown in Fig. 7 is used as the printing object image PI and the print processing described below is performed.

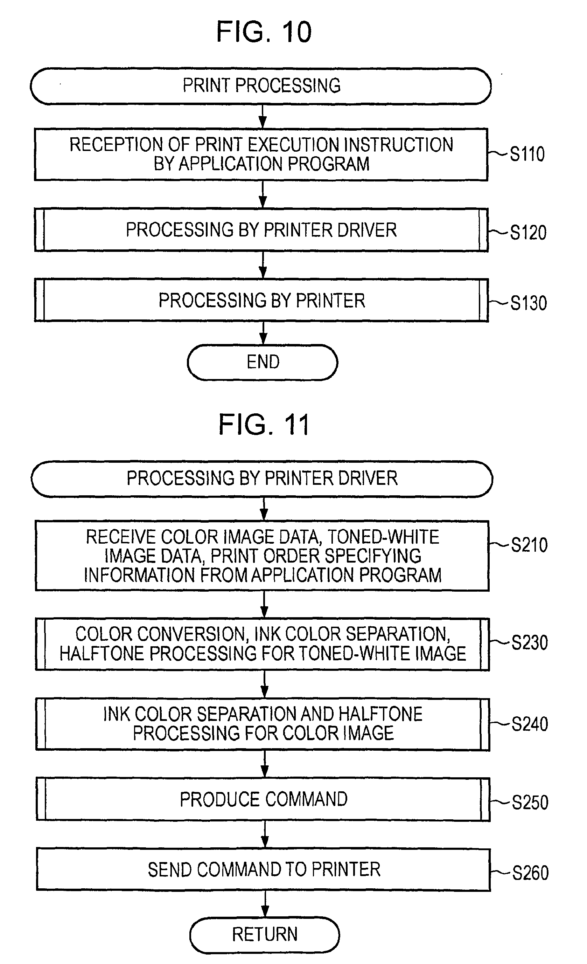

Fig. 10 is a flowchart showing the flow of the print processing in the printing system 10 according to the embodiment. The print processing of the embodiment is processing of forming the color image and the toned-white image in parallel on the transparent film serving as the printing medium, and producing a print piece on which the color image and the toned-white image are formed thereon.

In Step S110 (shown in Fig. 10), the CPU 210 (shown in Fig. 2) executing the application program AP (shown in Fig. 4) receives a print execution instruction from a user. The CPU 210 outputs the color image data Cdata, the toned-white image data WITdata, and the print order specifying information SS to the printer driver 300 upon receiving the print execution instruction (see Fig. 4). In the embodiment, the color image data Cdata is data specifying the color image Ic in the printing object image PI with CMYK values, and the toned-white image data WITdata is data specifying the toned-white image Iw in the printing object image PI with Lab values or T values. The print order specifying information SS is data specifying the print order of the color image and the toned-white image in the overlapping portion of the color image and the toned-white image.

Pixel values of the toned-white image data WITdata may be specified via the user interface or preset values may be used as the pixel values.

In Step S120 of the print processing (shown in Fig. 10), processing by the CPU 210 which executes the printer driver 300 (shown in Fig. 4) is executed. Fig. 11 is a flowchart showing the flow of processing by the CPU 210 which executes the printer driver 300. In Step S210, the CPU 210 receives the color image data Cdata, the toned-white image data WITdata, and the print order specifying information SS output from the application program AP (see Fig. 4).

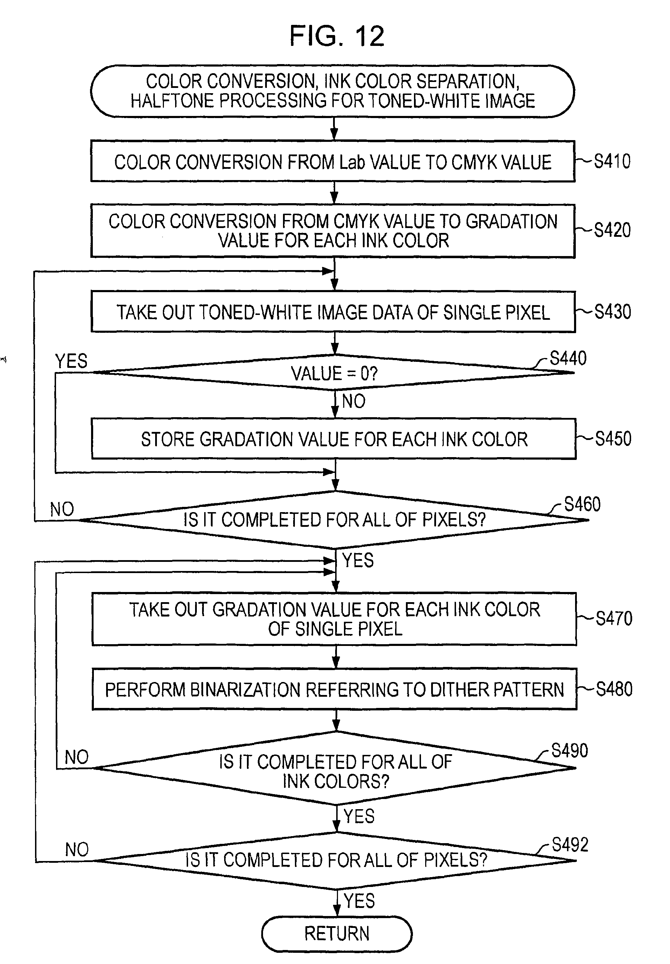

In Step S230 in the processing (Fig. 11) by the printer driver 300, the printer driver 300 executes the color conversion processing, ink color separation processing, and halftone processing for the toned-white image. Fig. 12 is a flowchart showing the flow of the color conversion processing, the ink color separation processing, and the halftone processing for the toned-white image. In Step S410, a toned-white image color conversion module 340 (Fig. 4) converts the Lab values of the toned-white image data WITdata to the CMYK values. The color conversion is performed referring to a toned-white image look-up table LUTw (Fig. 4).

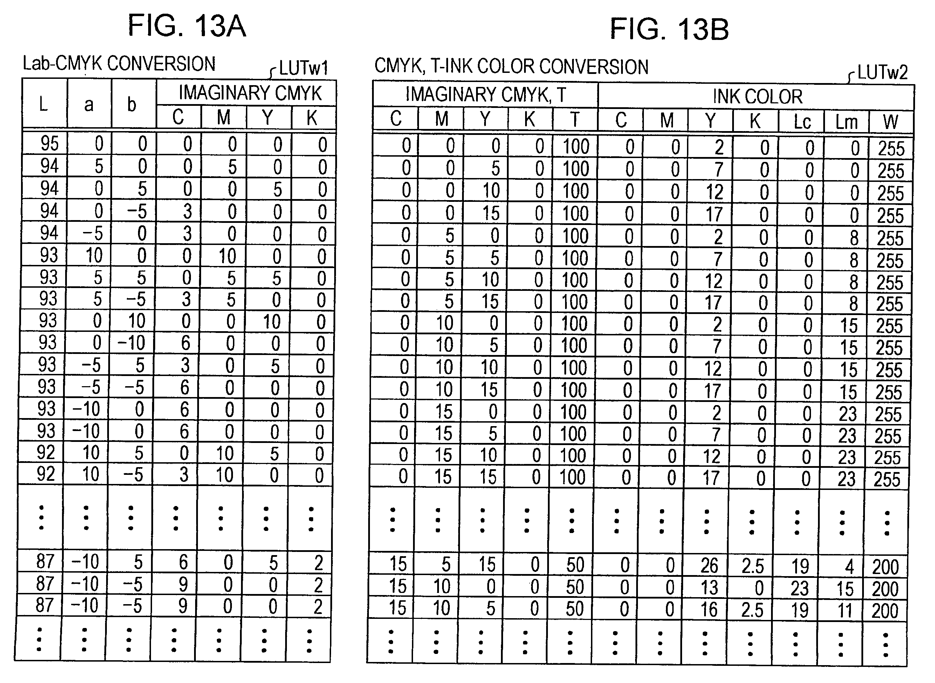

Figs. 13A and 13B are explanatory views partially showing examples of the toned-white image look-up table LUTw. Fig. 13A shows the toned-white image look-up table LUTw1 which is referenced when conducting the color conversion from the Lab values to the CMYK values. As shown in Fig. 13A, a corresponding relation between the preset Lab values and the CMYK values is specified in the toned-white image look-up table LUTw1. In the toned-white image look-up table LUTw1, each gradation value of CMYK is specified with a value in the range from 0 to 100. The toned-white image color conversion module 340 converts the Lab values to the CMYK values referring to the toned-white image look-up table LUTw1.

In Step S420 (Fig. 12), a toned-white image ink color separation processing module 350 (Fig. 4) performs ink color separation processing of converting the combination of each of the CMYK values determined in Step S410 and each of the T values of the toned-white image data WITdata to a gradation value by an ink color. As described above, the printer 100 of the embodiment prints using total seven color inks of cyan (C), magenta (M), yellow (Y), black (K), light cyan (Lc), light magenta (Lm), and white (W). In the ink color separation processing, the combination of each of the CMYK values and each of the T values is converted to the gradation value for each of seven ink colors. The ink color separation processing is performed referring to the toned-white image look-up table LUTw (Fig. 4). Fig. 13B shows a toned-white image look-up table LUTw2 which is referenced when the combinations of the CMYK values and the T values are converted to the gradation values of respective ink colors. As shown in Fig. 13B, in the toned-white image look-up table LUTw2, a corresponding relation between the combinations of the respective preset CMYK values and the respective T values and the gradation values of the respective ink colors are specified. In the toned-white image look-up table LUTw2, the gradation value of each color is specified with a value in the range from 0 to 255. The toned-white image ink separation processing module 350 converts the combination of each of the CMYK values and each of the T values to the gradation value for each of the ink colors referring to the toned-white image look-up table LUTw2.

As shown in Fig. 13(b), in the embodiment, for the white-toning (adjusting a white color by mixing color inks excluding a white color ink with the white color ink), four color inks of yellow (Y), black (K), light cyan (Lc), and light magenta (Lm) among six color inks are used but two color inks of cyan (C) and magenta (M) are not used. That is, a dark color ink out of two kinds of inks (a light color ink and a dark color ink)-of one color is not used for the white-toning.

In Step S430 (Fig. 12), the toned-white image ink separation processing module 350 (Fig. 4) takes out single pixel data from the toned-white image data. In Step S440, the toned-white image ink separation processing module 350 judges a value of the taken data of the single pixel. In the case in which it is judged such that the value of the pixel is not zero (Step S440: No), the toned-white image ink separation processing module 350 stores gradation values of respective ink colors determined in Step S420 (Step S450). In the case in which it is judged such that the value of the pixel is zero (Step S440: Yes), the processing of Step S450 is skipped.

The processing from Step S430 to Step S450 of Fig. 12 is repeatedly performed until the processing for all of the pixels in the toned-white image data is finished (see step S460). In the case in which the processing for all of the pixels is finished (Step S460: Yes), the toned-white image halftone processing module 360 (Fig. 4) takes out gradation values of respective ink colors of a single pixel (Step S470) and performs binarization processing (halftone processing) referring to dither patterns of respective ink colors (Step S480). The binarization processing is performed referring to preset toned-white image halftone resource HTw (Fig. 4). The toned-white image halftone resource HTw may be set with a priority on filling of dots in the toned-white image. The binarization processing is repeatedly performed until the binarization for all of the ink colors is finished (see Step S490). The processing from Step S470 to Step S490 is repeatedly performed until the processing for all of the pixels is finished (see Step S492).

By the color conversion processing, the ink color separation processing, and the halftone processing for the toned-white image shown in Fig. 12, toned-white image dot data which specifies ON/OFF of a dot for each ink color for respective pixels is generated when forming the toned-white image.

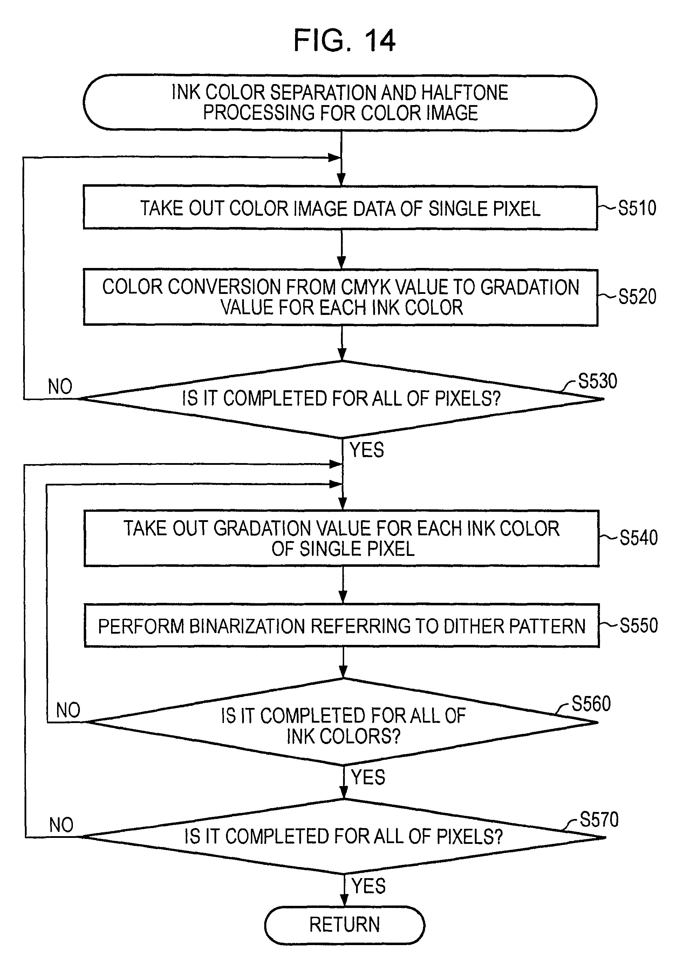

In Step S240 in the processing (Fig. 11) by the printer driver 300, the printer driver 300 executes the color conversion processing, the ink color separation processing, and the halftone processing for the color image. Fig. 14 is a flowchart showing the flow of the color conversion processing, the ink color separation processing, and the halftone processing for the color image. In Step S510, a color image ink separation processing module 310 (Fig. 4) takes out data of data of a single pixel data in the color image data. In Step S520, the color image ink color separation module 310 performs the ink color separation processing of converting the taken single pixel data (CMYK values) to the gradation values of respective ink colors. As described above, the printer 100 of the embodiment prints by using total seven color inks: cyan (C), magenta (M), yellow (Y), black (K), light cyan (Lc), light magenta (Lm), and white (W). Accordingly, in the ink color separation processing, the CMYK values are converted to the gradation values for respective seven ink colors. The ink color separation processing is performed referring to the color image look-up table LUTc (Fig. 4). Here, as for a density value, the density value after the black patch is printed and the calibration is performed is used. The printing of the black patch and the calibration processing will be described below in detail.

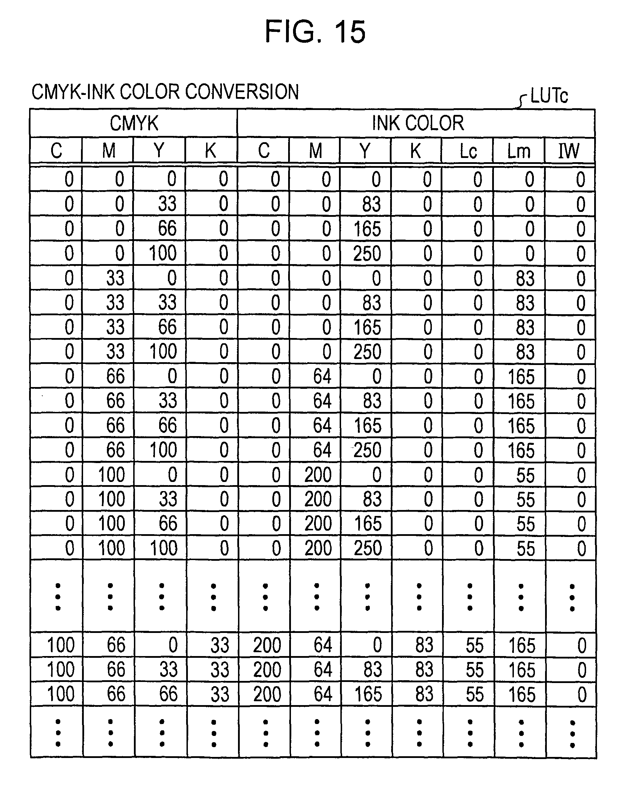

Fig. 15 is an explanatory view partially showing an example of the color image look-up table LUTc. As shown in Fig. 15, in the color image look-up table LUTc, corresponding relation between the preset CMYK value and the gradation value for each of ink colors is specified. In the color image look-up table LUTc, the respective gradation values of CMYK are specified with values in the range from 0 to 100. The gradation value of each of ink colors is specified with a value in the range from 0 to 255. The color image ink separation processing module 310 converts the CMYK values to the gradation values of respective ink colors referring to the color image look-up table LUTc. As shown in Fig. 15, in the embodiment, six ink colors except white are used to form the color image. That is, the white color ink is not used.

The processing of Step S510 and Step S520 of Fig. 14 is repeatedly performed until the processing for all of the pixels of the color image data is finished (see Step S530). In the case in which the processing for all of the pixels is finished (Step S530: Yes), a color image halftone processing module 320 (Fig. 4) takes out gradation values of respective ink colors for a single pixel (Step S540), and performs the binarization processing (halftone processing) referring to the dither patterns of respective ink colors (Step S550). The binarization processing is executed referring to the preset color image halftone resource HTc (Fig. 4). Alternatively, the color image halftone resource HTc may be set with a priority on suppression of granularity. The binarization processing is repeatedly executed until the processing for all of the ink colors is finished (see Step S560). The processing from Step S540 to Step S560 is repeatedly executed until the processing for all of the pixels is finished (see Step S570).

By the color conversion processing, the ink color separation processing, and the halftone processing for the color image which is shown in Fig. 14, color image dot data which specifies ON/OFF of dots of respective ink colors for each of pixels when forming the color image is produced.

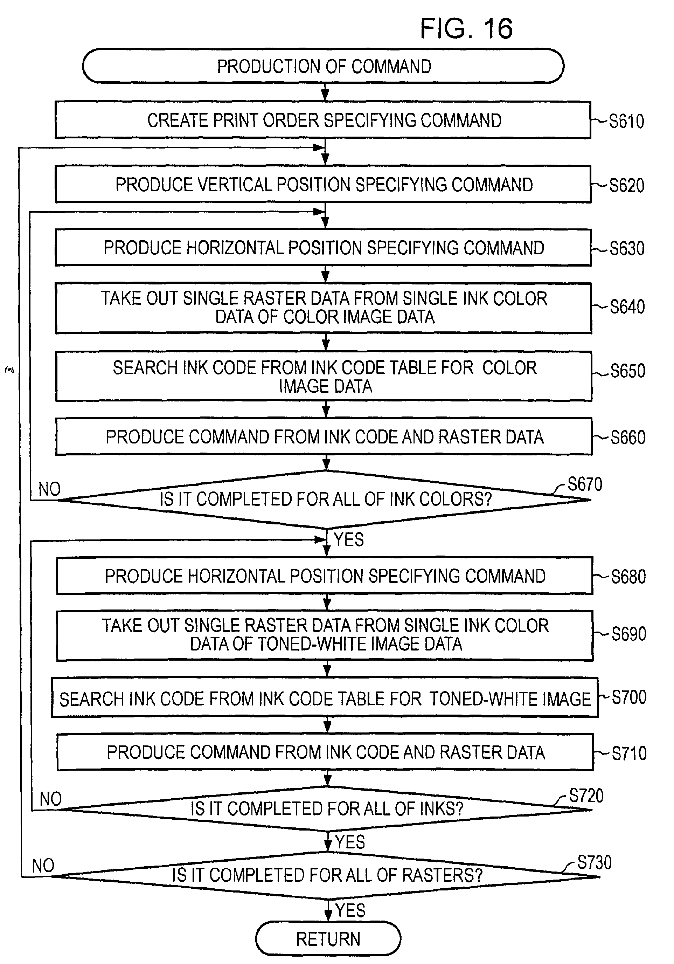

In Step S250 in the processing (Fig. 11) by the printer driver 300, a command producing module 370 (Fig. 4) of the printer drive 300 performs command production processing. Fig. 16 is a flowchart showing the flow of the command production processing.

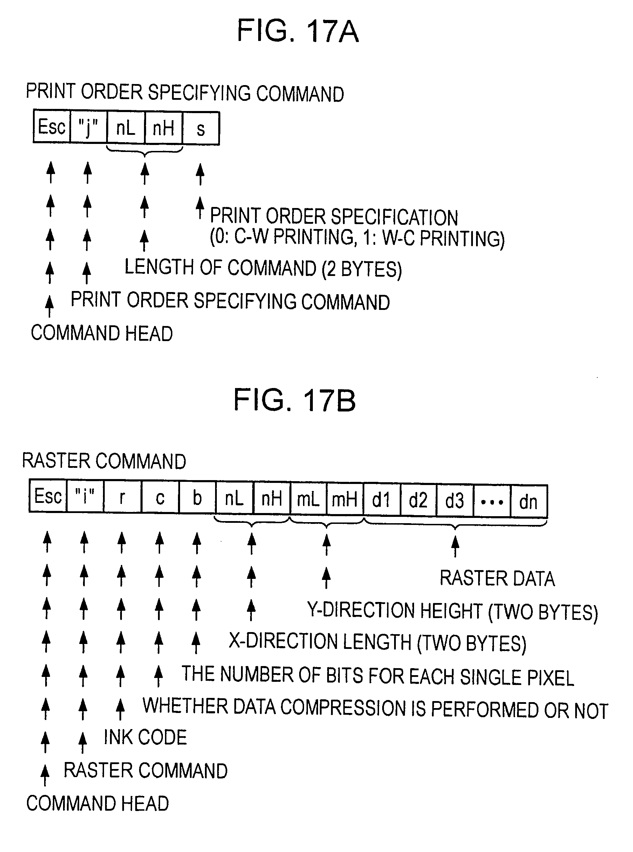

In Step S610 of the command production processing (Fig. 16), a command producing module 370 (Fig. 4) produces a print order specifying command on the basis of the print order specifying information SS output from the application program AP. Figs. 17A and 17B are explanatory views showing examples of the command produced by the command production processing. As shown in Fig. 17A, the print order specifying command includes an identifier representing a command head, an identifier showing that the command is a print order specifying command, a command length (2 byte), and specification of print order.
In the specification of print order, for example, the value "0" represents the C-W printing (print order in which the color image Ic is formed first and then the toned-white image Iw is formed on the color image Ic) and the value "1" represents the W-C printing (print order in which the toned-white image Iw is formed first and then the color image Ic is formed on the toned-white image Iw). The command producing module 370 determines the print order by referring to the print order specifying information SS and produces the print order specifying command which specifies the determined print order.

In Step S620 (Fig. 16), the command producing module 370 (Fig. 4) produces a vertical position specifying command on the basis of the color image dot data received from the color image halftone processing module 320 and the toned-white image dot data received from the toned-white image halftone processing module 360. The vertical position specifying command is a command of specifying a starting position of the image in the vertical direction (Y direction). The vertical position specifying command is produced as a common command for all of inks.

Next, the command producing module 370 (Fig. 4) produces a raster command corresponding to the color image through the processing from Step S630 (Fig. 16) to Step S670. In Step S630, the command producing module 370 produces a horizontal position specifying command for a selected single color ink on the basis of the color image dot data. The horizontal position specifying command is a command of specifying starting position of the image in the horizontal direction (X direction) for a single ink color upon forming the color image. The command producing module 370 sets a proper image starting position by referring to the color image dot data for a single ink color and produces the horizontal position specifying command.

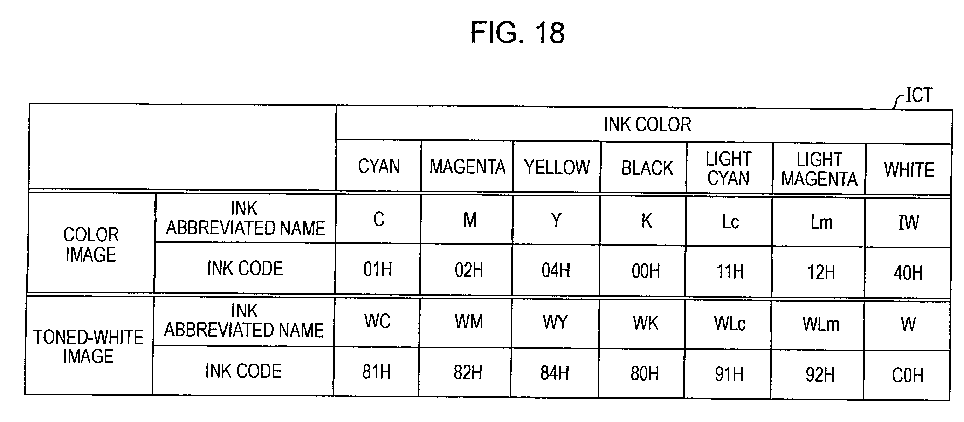

In Step S640 (Fig. 16), the command producing module 370 (Fig. 4) takes out dot data of a single raster for the selected single ink color from the color image dot data. In Step S650, the command producing module 370 searches an ink code by referring to an ink code table ICT. Fig. 18 is an explanatory view showing an example of the content of the ink code table ICT. As shown in Fig. 18, in the embodiment, each ink color is assigned with a unique abbreviated ink name and an ink code. In the embodiment, a single ink color is assigned with two different abbreviated ink names and two ink codes, one for the color image and the other for the toned-white image. That is, the abbreviated ink name and the ink code uniquely correspond to the combination of a single ink color among plural ink colors and any one out of the color image and the toned-white image. For example, cyan is assigned with the abbreviated ink name "C" for the color image and the ink code "01H", and also with the abbreviated ink name "WC" for the toned-white image and the ink code "81H." In the same manner, white is assigned with the abbreviated ink name "IW" for the color image and the ink code "40H" and with the abbreviated ink name "WC" for the toned-white image and the ink code "C0H." In Step S650, the command producing module 370 searches the ink code for the color image in the ink code table ICT.

In Step S660 (Fig. 16), the command producing module 370 (Fig. 4) produces the raster command on the basis of the taken dot data for the single raster part and the searched ink code. Fig. 17B shows an example of the raster command. As shown in Fig. 17B, the raster command includes an identifier representing a command head, an identifier showing that the command is the raster command, an ink code, an identifier showing whether the data is compressed or not, the number of bits for a single pixel, a X-direction length (2 bytes), a Y-direction length (2 bytes) and raster data (dot data).

The processing from Step S630 to Step S660 of the command producing processing (Fig. 16) is repeatedly performed until the processing for all of the ink colors used in formation of the color image is finished. That is, in the case in which there is any remaining ink color which has not yet undergone the processing (Step S670: No), one ink color which has not yet undergone the processing is selected, and the processing from Step S630 to Step S660 is performed for the selected ink color. If the processing for all of the ink colors is finished (Step S670: Yes), as for a single raster, production of the raster commands corresponding to the respective ink colors used in formation of the color image is completed.

Next, the command producing module 370 (Fig. 4) produces the raster commands corresponding to the toned-white image through-out the processing from Step S680 (Fig. 16) to Step S720. In Step S680, the command producing module 370 produces a horizontal position specifying command for the selected single ink color on the basis of the toned-white image dot data. The horizontal position specifying command is a command specifying starting position of the image in the horizontal direction (X direction) for a single ink color upon forming the toned-white image. The command producing module 370 sets proper image starting position by referring to the toned-white image dot data for a single ink color and produces the horizontal position specifying command.

In Step S690 (Fig. 16), the command producing module 370 (Fig. 4) takes out the dot data of a single raster for a selected single ink color from the toned-white image dot data. In Step S700, the command producing module 370 searches the ink code by referring to the ink code table ICT. The command producing module 370 searches the ink code for the toned-white image from the ink code table ICT (Fig. 18).

In Step S710 (Fig. 16), the command producing module 370 (Fig. 4) produces the raster commands (see Fig. 17B) on the basis of the taken single raster dot data and the searched ink code. The processing from Step S680 to Step S710 of the command producing processing is repeatedly performed until the processing for all of the ink colors used in formation of the toned-white image is finished. That is, in the case in which there is any remaining ink color which has not yet undergone the processing (Step S720: No), a single ink color which has not yet undergone the processing is selected, and the processing from Step S680 to Step S710 is performed for the selected single color. If the processing for all of the ink colors is finished (Step S720: Yes), as for a single raster, production of the raster commands corresponding to the respective ink colors used in formation of the toned-white image is completed.

The processing from Step S620 to Step S720 of the command producing processing (Fig. 16) is repeatedly performed until the processing for all of the rasters of the printing object image PI is completed. That is, in the case in which there is any remaining raster which have not yet undergone the processing (Step S730: No), a raster which has not yet undergone the processing (a following raster of the raster which has undergone the previous processing) is selected, and the processing from Step S620 to Step S720 is performed for the selected raster. The processing for all of the rasters is finished (Step S730: Yes), as for the entire raster, production of the commands corresponding to the respective ink colors used in formation of the color image and the toned-white image is completed.

In Step S260 in the processing (Fig. 11) by the printer driver 300, the printer driver 300 sends the print order specifying command, the vertical position specifying command, the horizontal position specifying command, and the raster command produced in Step S250 to the printer 100. Thus the processing by the printer driver 300 is completed.

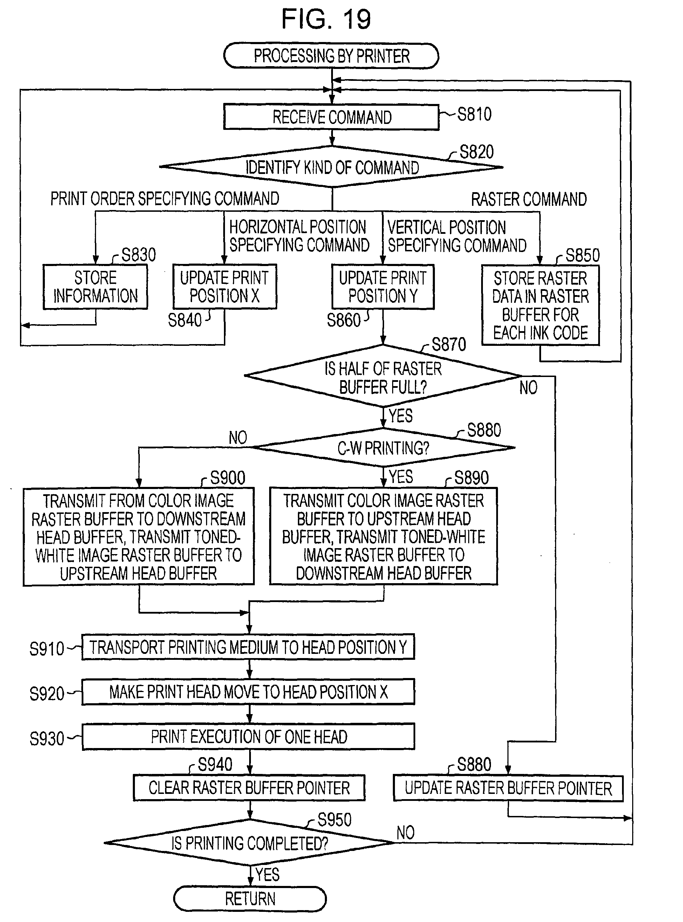

In Step S130 of the print processing (Fig. 10), the processing by the printer 100 is performed. Fig. 19 shows a flowchart showing the flow of the processing by the printer 100. In Step S810, the CPU 110 (Fig. 3) which executes the command processing module 112 (Fig. 5) of the printer 100 receives the command sent from the printer driver 300 of the PC 200. The CPU 110 identifies the kind of the received command (Step S820), and executes the processing according to the kind of command. In the case in which the received command is the print order specifying command, the CPU 110 stores the information showing the print order specified by the print order specifying command in the RAM 130 (Step S830). On the other hand, in the case in which the received command is the horizontal position specifying command, the CPU 110 updates horizontal-direction printing starting position X (Step S840).

In the case in which the received command is the raster command, the CPU 110 (Fig. 3) executing the command processing module 112 (Fig. 5) stores the raster data (dot data) contained in the raster command in the raster buffer 132 (Fig. 5) for each ink code (Step S850).

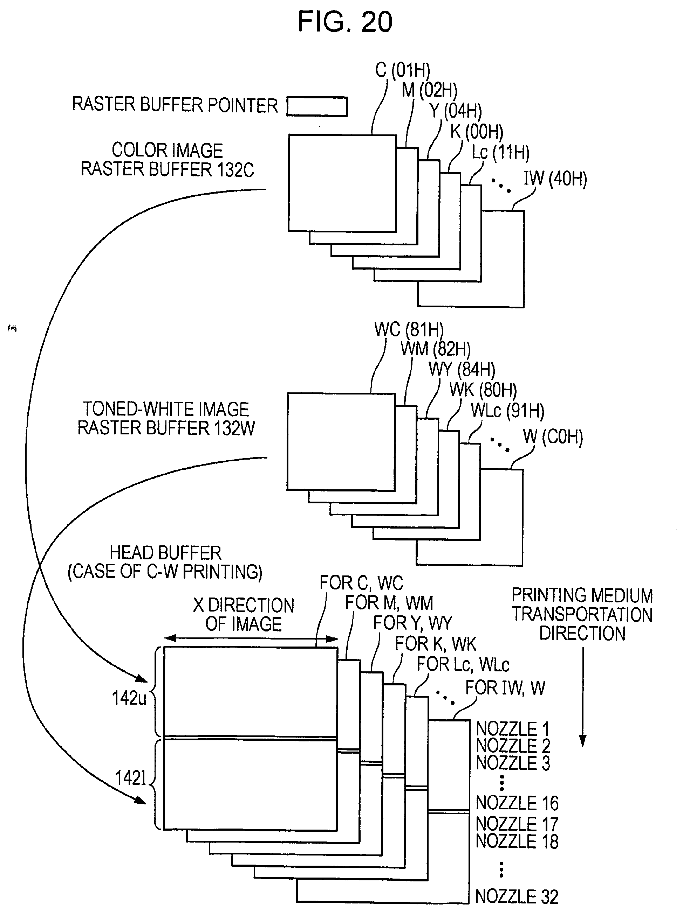

Fig. 20 is an explanatory view showing the detailed structure of the raster buffer and the head buffer. The upper portion of Fig. 20 shows the color image raster buffer 132c, and the middle portion shows the toned-white image raster buffer 132w. As shown in Fig. 20, the raster buffer 132 is divided into regions so as to correspond to each ink code (see Fig. 18). That is, the color image raster buffer 132c is structured to be a group of regions corresponding to each ink code for the color image. The toned-white image raster buffer 132w is also structured to be a group of regions corresponding to each ink code for the toned-white image. The X-direction size of each region of the raster buffer 132 matches the size of the image, and the Y-direction size is not shorter than a half of the height of the print head 144. The raster buffer 132 has a Y-direction raster buffer pointer showing how far the raster data is received.

The lower portion of Fig. 20 shows the head buffer 142 (Fig. 5). As shown in Fig. 20, the head buffer 142 is divided into regions so as to correspond to seven ink colors. That is, the head buffer 142 is structured to be a group of a cyan (C, WC) region, a magenta (M, WM) region, a yellow (Y, WY) region, a black (K, WK) region, a light cyan (Lc, WLc) region, a light magenta (Lm, WLm) region, and a white (IW, W) region. The X-direction size of each region of the head buffer 142 corresponds to the scanning distance of the carriage, and the Y-direction size corresponds to the number of nozzles constituting the nozzle column 146 of the print head 144. Each of the regions of the heads buffer 142 which correspond to the ink colors is divided into an upstream head buffer 142u and a downstream head buffer 1421.

Figs. 21A, 21B, 21C are explanatory views showing the structure of the print head 144 of the printer 100. As shown in Fig. 21A and 21B, the print head 144 is provided with nozzle columns 146 corresponding to seven ink colors, respectively. The nozzle column 146 is formed so as to extend in the Y direction (print medium transportation direction). As shown in Fig. 21C, each of the nozzle columns 146 is composed of 32 nozzle groups arranged in the printing medium transportation direction. Among the nozzle groups constituting the nozzle column 146, the nozzle groups positioned within the upstream side half in the printing medium transportation direction (from the first nozzle (nozzle 1) to the sixteenth nozzle (nozzle 16)) are upstream nozzle groups, and the nozzle groups positioned within the downstream side half in the printing medium transportation direction (seventeenth nozzle (nozzle 17) to thirty second nozzle (nozzle 32) are called downstream nozzle groups.

As shown in Fig. 21A, when performing the W-C printing, formation of the toned-white image is performed using the upstream side nozzle groups of each nozzle column 146 of the print head 144, and formation of the color image is performed using the downstream nozzle groups. As shown in Fig. 21B, when performing the C-W printing, the color image is formed using the upstream nozzle groups of each nozzle column 146 of the print head 144 and formation of the toned-white image is performed using the downstream side nozzle groups. When performing the W-C printing, the upstream nozzle groups of each nozzle column 146 of the print head 144 corresponds to the second nozzle group in the invention, and the downstream nozzle groups correspond to the first nozzle group in the invention. Conversely, when performing the C-W printing, the upstream nozzle groups of each nozzle column 146 of the print head 144 correspond to first nozzle group of the invention and the downstream nozzle groups correspond to the second nozzle group.

As shown in Fig. 20, the upstream head buffer 142u is the head buffer 142 corresponding to an upstream side portion (upstream nozzle groups) of the print head 144 in the printing medium transportation direction, and the downstream head buffer 1421 is the head buffer 142 corresponding to a downstream side portion (downstream nozzle groups) of the print head 144 in the printing medium transportation direction.

In Step S850 of Fig. 19, the CPU 110 (Fig. 3) refers to the ink code contained in the received raster command, and stores the raster data in the position which is specified by the raster buffer pointer of the raster buffer 132 which corresponds to the ink code. Accordingly, the CPU 110 can sort the raster data into the proper regions of the raster buffer 132 without awareness of whether the raster command is a command for the color image or a command for the toned-white image.

The CPU 110 (Fig. 3) executing the command processing module 112 (Fig. 5) updates the printing start position Y in the vertical direction in the case in which the received command is the vertical position specifying command (Step S860). Next, the CPU 110 judges whether the raster buffer 132 corresponding to a half of the height of the print head 144 (Fig. 5) is full or not (that is, whether the raster data is stored) (Step S870). In the case in which it is not full (Step S870: No), the CPU 110 updates the raster buffer pointer of the raster buffer 132 (Step S880).

If the above-described processing is repeated and the raster data is stored in the raster buffer 132 which corresponds to the half of the height of the print head 144, it is judged such that the portion of the raster buffer 132 which corresponds to the half of the height of the print head 144 is full (Step S870: Yes). At this time, the CPU 110 (Fig. 3) judges whether the print order is the C-W printing or the W-C printing on the basis of the information showing the print order stored in the RAM 130 (Step S880). In the case in which the print order is the C-W printing (Step S880: Yes), the CPU 110 transmits the raster data from the color image raster buffer 132c to the upstream head buffer 142u (Fig. 5) and the raster data from the toned-white image raster buffer 132w to the downstream head buffer 1421 (Fig. 5) (Step S890). Fig. 20 shows operation such that, in the case in which the print order is the C-W printing, the raster data is transmitted from the color image raster buffer 132c to the upstream head buffer 142u, and the raster data is transmitted from the toned-white image raster buffer 132w to the downstream head buffer 1421. With this operation, formation of the color image is performed using the upstream nozzle groups of each nozzle column 146 of the print head 144, and reference of the C-W printing (Fig. 21B) in which formation of the toned-white image is performed using the downstream nozzle groups is prepared. Further, since physical print positions on paper between the upstream nozzle groups and the downstream nozzle groups are different from each other, in the case of transmitting the raster data from the raster buffer 132, the transmission start position of the data in the raster buffer is determined taking the difference of the printing positions between the upstream nozzle groups and the downstream nozzle groups into consideration.

On the other hand, in the case in which the print order is the W-C printing (Step S880: No), the CPU 110 transmits the raster data from the color image raster buffer 132c to the downstream head buffer 1421 (Fig. 5), and the raster data from the toned-white image raster buffer 132w to the upstream head buffer 142u (Step S900). With this operation, formation of the toned-white image is performed using the upstream nozzle groups of each nozzle column 146 of the print head 144, and reference for the W-C printing(Fig. 21A) in which formation of the color image is performed using the downstream nozzle groups is prepared.

Next, the CPU 110 (Fig. 3) transports (sub-scans) the printing medium PM to the position Y of the head by controlling the printing medium sending controller 160 and the printing medium sending motor 162 (Step S910), makes the print head 144 move to the printing start position X by controlling the carriage controller 150 and the carriage motor 152 (Step S920), and performs printing as much as the height of the print head 144 by performing the main-scanning. (Step S930). For this instance, in the W-C printing (see Fig. 21A), formation of the toned-white image by the upstream nozzle groups (see Fig. 21C) of each nozzle column 146 of the print head 144 and formation of the color image by the downstream nozzle groups are performed in parallel. Further, in the C-W printing (see Fig. 21B), formation of the color image by the upstream nozzle groups of each nozzle column 146 of the print head 144 and formation of the toned-white image by the downstream nozzle groups are performed in parallel.

Next, the CPU 110 (Fig. 3) clears the raster buffer pointer of the raster buffer 132 (Step S940), judges whether the print processing of the entire printing object image PI is completed (Step S950), and the processing from Step S810 to Step S940 is repeatedly performed until it is judged such that the print processing is completed. If it is judged such that the print processing is completed, the print processing (Fig. 10) is finished.

Hereinafter, details about the processing of black patch print and calibration for acquiring a density value of a black image serving as the color image (the density value being used in Step S420 of Fig. 12 is described. The processing of the black patch print and calibration is performed in the case in which the CPU 210 (Fig. 2) executing the application program AP (Fig. 4) receives the print execution instruction from the user (Step S110 of Fig. 10).

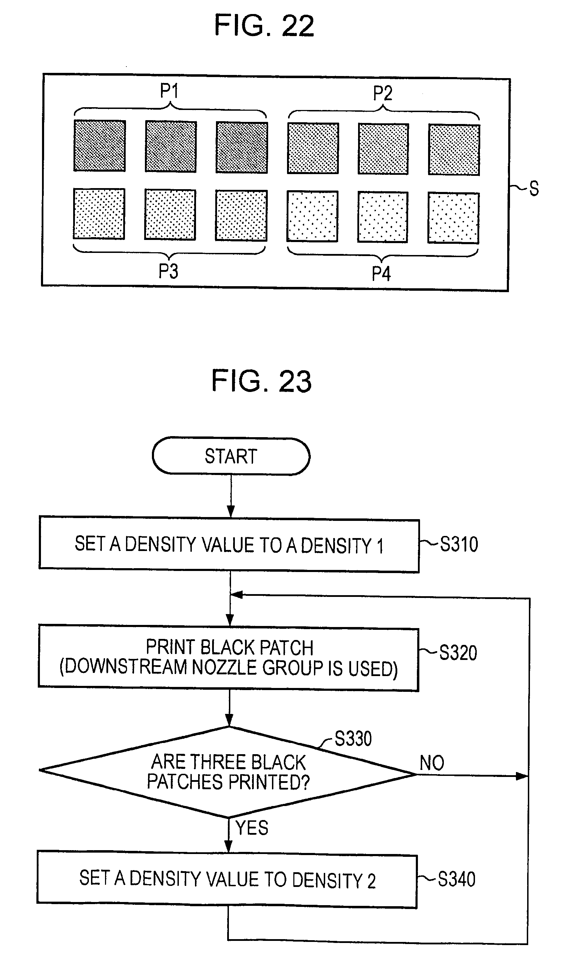

In the first place, a patch sheet for specifying the density of the black patch is printed by the printer 100 to specify the density of the black patch. Fig. 22 is an explanatory view showing an example of the patch sheet for specifying the density. In the example of Fig. 22, four black patch groups P1, P2, P3, and P4 are printed on the print surface of the patch sheet S. Each of the black patch groups is provided with three black patches having the same density and arranged at intervals. The black patch groups P1, P2, P3, and P4 have different densities and are arranged in the order such that their densities gradually decrease from the highest to the lowest.

Fig. 23 is a flowchart showing the flow of the processing of printing the patch sheet for the density specification. Fig. 23 shows the flow of printing two black patch groups P1 and P2 arranged in a single row. In Step S310, a density value of the first black patch group P1 as density 1 which is preset in the PC 200.

In Step S320, in the PC 200, the color conversion processing, the ink color separation processing, and the halftone processing with respect to the patch image data stored in, for example, the hard disk drive 280 are performed on the basis of the density value set in Step S310. Then, a single black patch which has passed through out the halftone processing is printed in the printer 100. Here, in the printer 100, the black patch is printed using the downstream side nozzle groups shown in the structure of the print head 144 of Fig. 21. For this instance, the black patch is printed by bidirectional main-scanning (BiD) of the print head 144.

In Step S330, it is judged whether three black patches constituting the black patch group P1 are printed. If the case in which three black patches are not printed (Step S330: No), the processing of Step S320 is repeatedly performed until all of the three black patches are printed. In the case in which all of the three black patches are printed (Step S330: Yes), in the PC 200, a density value of the next black patch group P2 is set with density 2 which is predetermined (Step S340). Then, returning to Step S320, the print processing of the black patch is repeatedly performed with the density value set in Step S340.

After the patch sheet S for the density specification is printed out from the printer 100, the user views and checks the patch sheet S on which the black patch groups P1, P2, P3 and P4 are printed, and makes an input of the black patch group having the smallest variance in brightness values of three black patches among the black patch groups with the use of a keyboard KB or a mouse MOU of the PC 200. With this, the set density value of the input black patch group is specified in particular as the density value of the black patch for the calibration processing. Alternatively, the density value of the black patch for the calibration processing may be specified in a manner such that variance of the L values of the black patches is automatically measured through the color measurement by an automatic spectrophotometer 192 of the printer 100 instead of the visual checking of the patch sheet by the user.

After specifying the density value of the black patch, a single black patch is printed with the specified density value in the printer 100. In the printer 100, the black patch is printed using the downstream nozzle groups of the print head 144. For this instance, the black patch is printed by the bidirectional main-scanning (Bi-D) of the print head 144.

Next, the calibration processing for the printed single black patch is performed. The density value of the black patch after the calibration is used as the density value of the black image. The black image to be printed is printed by using the upstream nozzle groups of the print head 144 because the print order is the C-W printing. For this instance, the black image is printed by the unidirectional main-scanning (Uni-D) of the print head 144.

### B. Modified example:

The invention is not limited to the above-described examples and embodiments but can be implemented in various forms within the scope which is not departing from the spirit of the invention. For example, the following modifications may be allowable.

### B1. Modified example 1:

The printing object image PI (Fig. 7) for the correction processing in the above embodiment is just only an example, and the printing object image PI for the correction processing can be diversely modified. For example, a toned-white image Iw composed of regions having a single density may be used as the printing object image PI.

### B2. Modified example 2:

In the above embodiment, when printing the printing object image PI for the correction processing, the nozzle group of the head is divided into two groups, upstream and downstream groups, and the color image Ic (black image) and the toned-white image Iw (white image) are formed in parallel. However, it is not absolutely necessary to form the color image Ic and the toned-white image Iw in parallel. That is, it is allowable that the color image Ic is formed on the transparent film TF first and then the toned-white image Iw is formed on the formed color image Ic by rewinding the transparent film TF.

### B3. Modified example 3:

Although, in the above embodiment, description is given of the correction processing in which the white color ink is an object to be adjusted, correction processing in which another color ink is an object to be adjusted may be performed. However, in the case of the correction processing in which another color ink is an object to be adjusted, the printing object image PI may be directly formed on the print surface of the transparent film TF upon printing the printing object image PI for the correction processing. That is, it is unlikely that the black image is formed between the transparent film TF and the object image to be color-measured. This is because it is possible to accomplish the color measurement of the print image with good accuracy even without formation of the black image in the case of the correction processing in which another color ink is an object to be adjusted.

### B4. Modified example 4

The structure of the printing system 10 of the above-described embodiment is provided just as an example and therefore the structure of the printing system 10 can be diversely modified. For example, although the printer 100 according to the above embodiment is a printer which prints using seven color inks: cyan, magenta, yellow, black, light cyan, light magenta, and white, it is sufficient that the printer is a printer 100 which prints using plural color inks including a white color ink. For example, the printer 100 may be a printer which prints using 5 color inks: cyan, magenta, yellow, black, and white.

Further, according to the above embodiment, although only six color inks but the whit ink are used in formation of the color image, ink colors used in the formation of the color image can be arbitrarily set depending on ink colors which can be used in the printer 100. For example, it is allowable that the white color ink is used in the formation of the color image.

Still further, according to the above embodiment, although five color inks of white, yellow, black, light cyan, and light magenta are used but two ink colors of cyan and magenta are not used in formation of the toned-white image, the ink colors used in formation of the toned-white image can be arbitrarily set depending on the ink colors which can be used in the printer 100. For example, only four color inks of white, yellow, light cyan, and light magenta may be used or seven color inks of white, yellow, black, light cyan, light magenta, cyan, and magenta may be used to form the toned-white image.

Yet still further, according to the embodiment, the printer 100 is a printer which prints by reciprocating (main-scanning) the carriage on which the print head 144 is mounted. However, the invention can be applied to print processing performed by a line printer in which there is no reciprocal movement of the carriage.

Furthermore, according to the embodiment, the printer driver 300 is installed in the PC 200, and the printer 100 prints by receiving the commands from the printer driver 300 of the PC 200 (see Fig. 4). However, it is also possible that the printer 100 has the same function as the printer driver 300 including the toned-white image specifying module and the UI control module which is not shown in the figures and the printer 100 prints by receiving the color image data Cdata, the toned-white image data WITdata, and the print order specifying information SS from the application program AP of the PC 200. Alternatively, the printer 100 may further have the same function as the application program AP, so production of the color image data Cdata, the toned-white image data WITdata, and the print order specifying information SS, and the print processing may be performed in the printer 100.

Still furthermore, according to the above embodiment, the contents of the toned-white image look-up table LUTw and the color image look-up table LUTc are examples, and these contents are, for example, empirically set depending on the composition of inks used in the printer 100. The contents diversely vary according to the contents (color space in use) of the data output from the application program AP and ink colors used in the printer 100. Similarly, the contents of the color conversion processing and the ink color separation processing in which the tables are used diversely vary.

Yet furthermore, according to the embodiment, the halftone processing is performed referring to the dither pattern by the color image halftone processing module 320 and/or the toned-white image halftone processing module 360 (Fig. 4). However, the halftone processing may be performed by other methods such as a random dithering method (color error diffusion). Moreover, in the case in which the printer 100 can form dots having a plurality of sizes for each ink color, multi-value processing which determines ON/OFF and sizes of the dots may be conducted instead of the binarization which determines ON/OFF of the dots by the halftone processing.

Moreover, in the above embodiment, the structures of the print order specifying command, the raster command and the content of the ink code table ICT are provided just as examples and are diversely modified. In the above embodiment, the ink codes uniquely correspond to the respective combinations of one of the plural ink colors and any one of the color image and the toned-white image. However, it is not absolutely necessary to set the ink codes in such a manner. If the ink codes are set in that manner, the CPU 110 of the printer 100 can perform the command processing according to the ink code contained in the raster command without awareness of whether the raster command is for the color image or for the toned-white image.

In the above embodiment, a portion of the structure realized by hardware may be changed to software. Conversely, a portion of the structure realized by software may be changed to hardware.

In the case in which a portion of the function or the entire function of the invention is realized by software, the software (computer program) can be provided in the form in which it is stored in a computer readable recording medium. In the invention, the term "computer readable recording medium" includes internal storage devices in a computer such as various RAMs and ROMs and external storage devices fixed to a computer such as a hard disk as well as unlimitedly includes mobile recording media such as a flexible disk and a CD-ROM.

The printer 100 according to the above embodiment can perform the print processing in which the color image (which includes a color image formed using a white color ink) is formed. In such a case, the nozzle columns 146 of the print head 144 are not divided into upstream and downstream groups, the printing is performed using the entire nozzle columns 146. That is, the printer 100 may perform the printing by dividing the nozzle columns 146 into the color image forming nozzle groups and the toned-white image forming nozzle groups only in the case of printing both of the color image and the toned-white image.

## Claims

1. A printing apparatus (100) for printing on a transparent printing medium (TF) with a back surface to which a white protective layer (SE) is detachably attached by using a plurality of color inks including a white color ink, comprising:
a head (144) having one or more nozzle groups which are configured to eject ink;
a control unit (140) configured to form an image on the transparent printing medium by controlling the head (144); and
a color measuring unit (192) configured to measure color of the image formed on the transparent printing medium (TF) in a state in which the white protective layer (SE) is attached to the transparent printing medium (TF),
wherein the control unit (140) is configured to control the head (144) such that a black image is formed on the transparent printing medium (TF) and a white image is formed on the formed black image in an overlapping manner when an object to be color-measured is the white image containing an image of a toned-white color which is an adjusted white color.

2. The printing apparatus (100) according to Claim 1, wherein the control unit (140) is configured to control the head (144) such that, when the object to be color-measured is an image other than the white image, the image which is the object to be color-measured is directly formed on the transparent printing medium (TF).

3. The printing apparatus (100) according to any one of claims 1 to 2, wherein the head (144) includes a first nozzle group for forming a color image containing a black image on the transparent printing medium (TF) and a second nozzle group for forming a white image on the transparent printing medium (TF) as the nozzle groups and the control unit (140) is configured to control the head (144) such that formation of the black image using the first nozzle group and formation of the white image using the second nozzle group are performed in parallel during at least a portion of a printing period when the object to be color-measured is the white image.

4. The use of the printing apparatus (100) according to any one of claims 1 to 3, wherein, when a plurality of black patches having the same density value at a plurality of densities are printed, a print density of the black image is set as a density of the black patches having the smallest variance in brightness values thereof among the plurality of black patches having the same density value.

5. The use of the printing apparatus (100) according to Claim 4, wherein, when receiving a print instruction of the white image, a single black patch having the density of which the variance in the brightness values is the smallest is printed (S320), a calibration is performed with respect to the single printed black patch, and the black image is printed using a density after the calibration.

6. The use of the printing apparatus (100) according to Claim 5, wherein the black patch to be printed to perform the calibration is printed by bidirectional printing (Bi-D), and the black image is printed by unidirectional printing (Uni-D).

7. The use of the printing apparatus (100) according to Claim 4, wherein the black patch is printed using a downstream side nozzle in a printing medium transportation direction and the black image is printed using an upstream side nozzle in the printing medium transportation direction.

8. A printing method of printing on a transparent printing medium with a back surface to which a white protective layer is detachably attached by using a plurality of color inks including a white color ink, comprising:
(a) forming an image on the transparent printing medium by controlling a head (144) having one or more nozzle groups which eject ink; and
(b) measuring color of the image formed on the transparent printing medium in a state in which the protective film is attached to the transparent printing medium,
wherein in (a), when an object to be color-measured is a white image containing an image of a toned-white color which is an adjusted white color, the head (144) is controlled such that a black image is formed on the transparent printing medium, and the white image is formed on the formed black image in an overlapping manner.

## Patentansprüche

1. Druckvorrichtung (100) zum Drucken auf einem transparenten Druckmedium (TF) mit einer Rückseite, an welcher eine weiße Schutzschicht (SE) lösbar befestigt ist, mithilfe einer Vielzahl von Farbtinten, einschließlich einer weißen Farbtinte, umfassend:
einen Kopf (144) mit einer oder mehreren Düsengruppen, die zum Ausstoßen von Tinte konfiguriert sind;
eine Steuereinheit (140), die zum Erzeugen eines Bildes auf dem transparenten Druckmedium durch Steuern des Kopfes (144) konfiguriert ist; und
eine Farbmesseinheit (192), die zum Messen von Farbe des auf dem transparenten Druckmedium (TF) erzeugten Bildes in einem Zustand, in dem die weiße Schutzschicht (SE) an dem transparenten Druckmedium (TF) befestigt ist, konfiguriert ist,
wobei die Steuereinheit (140) so zum Steuern des Kopfes (144) konfiguriert ist, dass ein schwarzes Bild auf dem transparenten Druckmedium (TF) erzeugt wird und ein weißes Bild auf dem erzeugten schwarzen Bild in einer überlappenden Weise erzeugt wird, wenn ein Objekt, an dem eine Farbmessung vorzunehmen ist, das weiße Bild ist, das ein Bild getönt-weißer Farbe enthält, die eine angepasste weiße Farbe ist.

2. Druckvorrichtung (100) nach Anspruch 1, wobei die Steuereinheit (140) so zum Steuern des Kopfes (144) konfiguriert ist, dass, wenn das Objekt, an dem eine Farbmessung vorzunehmen ist, ein anderes Bild als das weiße Bild ist, das Bild, welches das Objekt ist, an dem eine Farbmessung vorzunehmen ist, direkt auf dem transparenten Druckmedium (TF) erzeugt wird.

3. Druckvorrichtung (100) nach Anspruch 1 oder 2, wobei der Kopf (144) als Düsengruppen eine erste Düsengruppe zum Erzeugen eines Farbbildes, das ein schwarzes Bild enthält, auf dem transparenten Druckmedium (TF) und eine zweite Düsengruppe zum Erzeugen eines weißen Bildes auf dem transparenten Druckmedium (TF) umfasst, und die Steuereinheit (140) so zum Steuern des Kopfes (144) konfiguriert ist, dass das Erzeugen des schwarzen Bildes unter Verwendung der ersten Düsengruppe und Erzeugen des weißen Bildes unter Verwendung der zweiten Düsengruppe während zumindest eines Teils der Druckperiode parallel durchgeführt werden, wenn das Objekt, an dem eine Farbmessung vorzunehmen ist, das weiße Bild ist.

4. Verwendung der Druckvorrichtung (100) nach einem der Ansprüche 1 bis 3, wobei, wenn eine Vielzahl von schwarzen Flächenabschnitten, die denselben Dichtewert aufweisen, gedruckt werden, bei einer Vielzahl von Dichten, eine Druckdichte des schwarzen Bildes als eine Dichte der schwarzen Flächenabschnitte eingestellt wird, die unter der Vielzahl der schwarzen Flächenabschnitte, die denselben Dichtewert aufweisen, die kleinsten Abweichungen in Helligkeitswerten derselben aufweisen.

5. Verwendung der Druckvorrichtung (100) nach Anspruch 4, wobei, wenn eine Druckinstruktion für das weiße Bild empfangen wird, ein einziger schwarzer Flächenabschnitt gedruckt wird (S320), der die Dichte aufweist, deren Abweichung in dem Helligkeitswert am kleinsten ist, eine Kalibrierung hinsichtlich des einzigen gedruckten schwarzen Flächenabschnitts durchgeführt wird, und das schwarze Bild unter Verwendung einer Dichte nach der Kalibrierung gedruckt wird.

6. Verwendung der Druckvorrichtung (100) nach Anspruch 5, wobei der zu druckende schwarze Flächenabschnitt zur Durchführung der Kalibrierung mittels bidirektionalem Drucken (Bi-D) gedruckt wird, und das schwarze Bild mittels unidirektionalem Drucken (Uni-D) gedruckt wird.

7. Verwendung der Druckvorrichtung (100) nach Anspruch 4, wobei der schwarze Flächenabschnitt unter Verwendung einer in einer Druckmedium-Transportrichtung vorne angeordneten Seitendüse und das schwarze Bild unter Verwendung einer in einer Druckmedium-Transportrichtung hinten angeordneten Seitendüse gedruckt wird.

8. Druckverfahren zum Drucken auf einem transparenten Druckmedium mit einer Rückseite, an welcher eine weiße Schutzschicht (SE) lösbar befestigt ist, mithilfe einer Vielzahl von Farbtinten, einschließlich einer weißen Farbtinte, umfassend:
(a) Erzeugen eines Bildes auf dem transparenten Druckmedium durch Steuern eines Kopfes (144) mit einer oder mehreren Düsengruppen, die Tinte ausstoßen; und
(b) Messen von Farbe des erzeugten Bildes auf dem transparenten Druckmedium (TF) in einem Zustand, in dem die weiße Schutzschicht (SE) an dem transparenten Druckmedium (TF) befestigt ist,
wobei im Schritt (a), wenn ein Objekt, an dem eine Farbmessung vorzunehmen ist, ein weißes Bild ist, das ein Bild getönt- weißer Farbe, die eine angepasste weiße Farbe ist, enthält, der Kopf (144) so gesteuert wird, dass ein schwarzes Bild auf dem transparenten Druckmedium (TF) erzeugt wird und das weiße Bild auf dem erzeugten schwarzen Bild in einer überlappenden Weise erzeugt wird.

## Revendications

1. Appareil d'impression (100) pour imprimer sur un support d'impression transparent (TF) ayant une surface arrière à laquelle une couche de protection blanche (SE) est fixée de manière amovible en utilisant une pluralité d'encres de couleur comportant une encre de couleur blanche, comprenant :
une tête (144) ayant un ou plusieurs groupe(s) de buses qui sont configurées pour éjecter de l'encre ;
une unité de commande (140) configurée pour former une image sur le support d'impression transparent en commandant la tête (144) ; et
une unité de mesure de couleur (192) configurée pour mesurer la couleur de l'image formée sur le support d'impression transparent (TF) dans un état où la couche de protection blanche (SE) est fixée au support d'impression transparent (TF),
dans lequel l'unité de commande (140) est configurée pour commander la tête (144) de sorte qu'une image noire soit formée sur le support d'impression transparent (TF) et qu'une image blanche soit formée sur l'image noire formée de manière chevauchante lorsqu'un objet dont la couleur doit être mesurée est l'image blanche contenant une image d'une couleur de teinte blanche qui est une couleur blanche ajustée.

2. Appareil d'impression (100) selon la revendication 1, dans lequel l'unité de commande (140) est configurée pour commander la tête (144) de sorte que, lorsque l'objet dont la couleur doit être mesurée est une image autre que l'image blanche, l'image qui est l'objet dont la couleur doit être mesurée soit directement formée sur le support d'impression transparent (TF).

3. Appareil d'impression (100) selon l'une quelconque des revendications 1 à 2, dans lequel la tête (144) comporte un premier groupe de buses pour former une image couleur contenant une image noire sur le support d'impression transparent (TF) et un deuxième groupe de buses pour former une image blanche sur le support d'impression transparent (TF) comme étant les groupes de buses et l'unité de commande (140) est configurée pour commander la tête (144) de sorte que la formation de l'image noire en utilisant le premier groupe de buses et la formation de l'image blanche en utilisant le deuxième groupe de buses soient effectuées en parallèle pendant au moins une partie d'une période d'impression lorsque l'objet dont la couleur doit être mesurée est l'image blanche.

4. Utilisation de l'appareil d'impression (100) selon l'une quelconque des revendications 1 à 3, dans laquelle, lorsqu'une pluralité de becquets noirs ayant la même valeur de densité à une pluralité de densités sont imprimés, une densité d'impression de l'image noire est réglée comme étant une densité des becquets noirs présentant la plus petite variance de ses valeurs de luminance parmi la pluralité de becquets noirs ayant la même valeur de densité.

5. Utilisation de l'appareil d'impression (100) selon la revendication 4, dans laquelle, lors de la réception d'une instruction d'impression de l'image blanche, un seul becquet noir ayant la densité dont la variance des valeurs de luminance est la plus petite est imprimé (S320), un étalonnage est effectué par rapport au seul becquet noir imprimé, et l'image noire est imprimée en utilisant une densité après l'étalonnage.

6. Utilisation de l'appareil d'impression (100) selon la revendication 5, où le becquet noir à imprimer pour effectuer l'étalonnage est imprimé par impression bidirectionnelle (Bi-D), et l'image noire est imprimée par impression unidirectionnelle (Uni-D).

7. Utilisation de l'appareil d'impression (100) selon la revendication 4, dans laquelle le becquet noir est imprimé en utilisant une buse en aval dans une direction de transport du support d'impression et l'image noire est imprimée en utilisant une buse en amont dans la direction de transport du support d'impression.

8. Procédé d'impression permettant d'imprimer sur un support d'impression transparent ayant une surface arrière à laquelle une couche de protection blanche est fixée de manière amovible en utilisant une pluralité d'encres de couleur comportant une encre de couleur blanche, comprenant les étapes qui consistent :
(a) à former une image sur le support d'impression transparent en commandant une tête (144) ayant un ou plusieurs groupe(s) de buses qui éjectent de l'encre ; et
(b) à mesurer la couleur de l'image formée sur le support d'impression transparent dans un état où le film de protection est fixé au support d'impression transparent,
dans lequel dans l'étape (a), lorsqu'un objet dont la couleur doit être mesurée est une image blanche contenant une image d'une couleur de teinte blanche qui est une couleur blanche ajustée, la tête (144) est commandée de sorte qu'une image noire soit formée sur le support d'impression transparent, et que l'image blanche soit formée sur l'image noire formée de manière chevauchante.
